# EUROPEAN PATENT APPLICATION

(11) **EP 3 904 242 A1**
(43) Date of publication of application: **03.11.2021**
(21) Application number: 20171883.0
(22) Date of filing: 28.04.2020
(51) Int. Cl.: B65G 29/00, B65G 15/42

(54) **APPARATUS FOR LENGTHWISE MOVING OF ROD-LIKE ARTICLES**

(71) Applicant: International Tobacco Machinery Poland SP. Z O.O., 26-600 Radom (PL)
(72) Inventor: ZADECKI, Robert, 26-600 Radom (PL)
(74) Representative: Markieta, Jaroslaw Franciszek

(57) **Abstract**

An apparatus (1) for lengthwise moving of rod-like articles (S) comprising a conveyor (3) provided with pockets (2) adapted to convey the rod-like articles (S) situated transversely to the conveying direction; whereas a rotational element (20) is adapted to lengthwise moving of the conveyed rod-like articles (S) in the conveyor (3) pockets (2), and situated tangentially to the circumferential surface of the conveyed rod-like articles (S), characterised in that the rotational element (20) has the form of a roller (6, 6', 6") with a concave working surface (7) adapted to come into contact with the outside circumferential surface of the conveyed rod-like articles (S).

## Description

The object of the invention is an apparatus for lengthwise moving of rod-like articles.

In the food industry, straws which are usually made of plastic or paper are used to drink various kinds of beverages. These may be both one-part and two-part straws, straight straws or bent straws. Two-part straws usually have in their structure a lock connecting both parts so that after inserting one part into the other a beverage may be consumed with an already assembled straw without a risk that the connection will be leaky. In order to assemble a two-part straw, at least one of the straws has to be moved lengthwise, towards the other so that the smaller straw enters the larger straw.

In the tobacco industry, there are used apparatuses for lengthwise moving of the rod-like articles, for example during a transfer from a rod maker machine to a receiving drum, or for moving in grooves of a transferring drum, for example for the purpose of inspection or assembly of a segment filter.

Apparatuses for lengthwise moving of the rod-like articles, for example during the assembly of the telescopic straws or for lengthwise moving of the tobacco industry's rod-like articles on the transferring drum, are known in the prior art.

The document EP 0 276 025, disclosed a method for assembling a telescopic straw on a conveyor belt on which the straws are moved lengthwise in order to inspect and pack separately assembled straws into a foil.

The document JP03827769, disclosed an apparatus for assembling a telescopic straw of two parts which are placed in grooves of a conveyor drum. In that solution, a part of the straw with a greater diameter is put onto the straw with a smaller diameter by means of a pusher whose lengthwise motion is forced by a cam.

The publication EP 3 384 787, disclosed an apparatus for lengthwise moving of the rod-like articles from the rod maker machine to the receiving drum. A rod, after cutting it of a continuous rod, is moved by means of rollers situated right behind a cutting head and transferred lengthwise into a groove on the receiving drum on which the moving direction is changed from lengthwise to transverse.

The publication US 3 791 507 shows an apparatus for lengthwise moving of the rod-like articles in grooves of a transferring drum by means of the vacuum supplied to holes situated in the bottom of the groove. As a result of the vacuum supplied to the holes in an adequate sequence, a segment situated in the groove will start moving lengthwise towards the hole to which the vacuum will be supplied.

The object of the invention is an apparatus for lengthwise moving of rod-like articles comprising a conveyor provided with pockets adapted to convey the rod-like articles situated transversely to the conveying direction. The apparatus further comprises a rotational element adapted to lengthwise moving of the conveyed rod-like articles in the conveyor pockets, and situated tangentially to the circumferential surface of the conveyed rod-like articles. The apparatus according to the invention is characterised in that the rotational element has the shape of a roller with a concave working surface adapted to come into contact with the outside circumferential surface of the conveyed rod-like articles.

The apparatus according to the invention is characterised in that the concavity of the roller's working surface has a shape selected from a group comprising a section of: a circle, an ellipse, a one-sheeted hyperboloid, a parabola.

The apparatus according to the invention is characterised in that the concave working surface is adapted so that it remains in contact with at least two adjacent rod-like articles being conveyed.

The apparatus according to the invention is characterised in that the concave working surface is adapted so that it remains in contact with at least three adjacent rod-like articles being conveyed.

The apparatus according to the invention is characterised in that the rotational element is situated at an angle to the rotational axis of the conveyor and/or the longitudinal axis of the rod-like article.

The apparatus according to the invention is characterised in that the angles at which the rotational element is situated range between 5 and 175 degrees.

The apparatus according to the invention is characterised in that the working surface of the rotational element is made of a material selected from a group comprising: rubber, caoutchouc, spongy material, plastic, metal.

The object of the invention is further a method for moving the rod-like articles comprising steps wherein: the rod-like articles are fed to the conveyor pockets, whereas the rod-like articles are placed into the conveyor pockets transversely to the conveying direction. Furthermore, the rod-like articles are conveyed on the conveyor towards the rotational element situated tangentially with the working surface to the outside surface of the conveyed articles. The method is characterised in that by means of the rotational element in the form of the roller with the concave working surface adapted to come into contact with the outside circumferential surface of the articles being conveyed, the rod-like articles are moved lengthwise in the conveyor pockets from a first position to a second position.

The method according to the invention is characterised in that simultaneously at least two adjacent conveyed rod-like articles are moved lengthwise.

An advantage of the invention is its great effectiveness as compared to known solutions from the prior art, and the simplicity of its structure. Furthermore, the rod-like articles are moved lengthwise in a very simple, fast and gentle way so that they are not exposed to deformation and damage.

The object of the invention was presented in detail in a preferred embodiment in a drawing in which:
Fig. 1 shows an apparatus for lengthwise moving of rod-like articles in the first embodiment in a top view;
Fig. 2 shows the apparatus for lengthwise moving of the rod-like articles in the first embodiment in a side view;
Fig. 3 shows an enlarged fragment of the apparatus for lengthwise moving of the rod-like articles in the first embodiment in a side view;
Fig. 4 shows the apparatus for lengthwise moving of the rod-like articles in the second embodiment in a top view;
Fig.5 shows the apparatus for lengthwise moving of the rod-like articles in another embodiment in a perspective view;
Fig.6 shows the apparatus for lengthwise moving of the rod-like articles in another embodiment in a side view;
Fig. 7a shows the roller of the apparatus for lengthwise moving of the rod-like articles with a concave elliptic working surface,
Fig. 7b shows the roller of the apparatus for lengthwise moving of the rod-like articles with a conical shape and a concave working surface,
Fig. 7c shows the roller of the apparatus for lengthwise moving of the rod-like articles with the shape of one-sheeted hyperboloid.

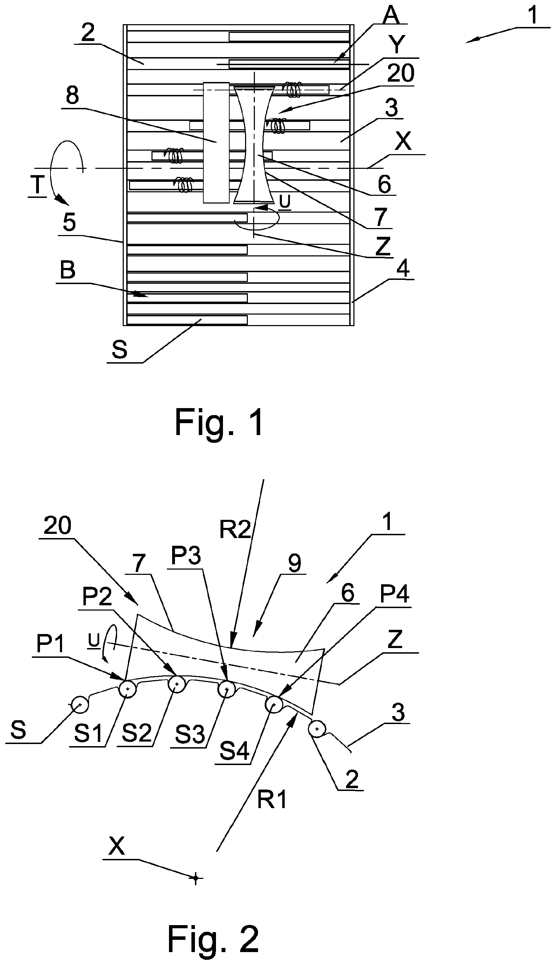

Fig. 1 shows an apparatus 1 for lengthwise moving of rod-like articles S in the first embodiment in a top view. The term of rod-like articles is to be understood as referring to continuous rods, straws, rods and other cylinder-shaped articles. The rod-like articles S are placed in pockets 2 situated on the circumferential surface of a conveyor 3 which in this case is a conveying drum. The rod-like articles S are placed in the pockets 2 in a position A which in this embodiment is situated on the right side of the drum. The article S in the position A is substantially pushed close to the edge 4 of the drum 3. During a rotation of the drum 3 in the direction T around the axis X, the rod-like articles S one after another come into contact with the working surface 7 of a rotational element 20. The rotational element 20 for lengthwise moving of the rod-like articles S has the shape of a roller 6 as shown in Fig. 1, but it may also have the shape of a roller or another rotational element having a working surface with a defined shape which may come into contact with the rod-like articles. The term of defined shape is substantially to be understood as referring to a surface which does not substantially change its shape in contact with the rod-like articles. It is acceptable to make such rotational element of rubber or sponge where in contact with the rod-like articles the outline of the entire working surface will remain unchanged, and such deformable rollers which take the conveyor's shape under an adequate pressure and adapt their shape to the surface of the rod-like articles conveyed on the conveyor. The rotational element 20 in the form of the roller 6 is situated above the drum 3 immovably relative to the drum 3, with the possibility of rotation around its axis of rotation Y.

At the moment when the rod-like articles S come into contact with the working surface 7 of the roller 6 they are put into rotational motion around their longitudinal axis Y. It will be caused by the friction occurring between the working surface 7 of the roller 6 and the outside surface of the rod-like article S, and the rotational motion of the drum 3 and of the rod-like articles S situated in its pockets 2. The rotational motion of the drum 3 itself will cause a rotational motion of the rod-like articles S situated in the pockets 2 around their longitudinal axis Y. Putting the roller 6 into rotational motion around the axis of rotation Z by means of a drive unit (not shown in the figure) will cause that the rod-like articles S will be additionally put into lengthwise axial motion. The direction of lengthwise movement of the rod-like articles along their axis Y depends on the directions of rotation of the roller 6. Fig. 1 shows the roller 6 during a rotation around the axis Z in the direction U. The rotational motion of the roller 6 will cause a lengthwise movement of the rod-like article S from the edge 4 towards the edge 5. The length of movement of the rod-like article S in the pocket 2 depends on the rotational speed of the roller 6 and on the time in which the rod-like article S remains in contact with the working surface 7 of the roller 6. Furthermore, the time of contact of the rod-like articles S with the roller 6 depends on the length of the working surface 7 and on the rotational speed of the drum 3. The length of movement of the rod-like article S in the pockets 2 may be also adjusted by varying the rotational speed of the roller 6. At the moment when the rod-like articles S lose contact with the working surface 7 they are at the position B on the drum 3.

A change in position from the position A to the position B and the lengthwise axial motion of the rod-like articles S may be used for example for scanning and quality inspection of the outside surface of the rod-like article S by means of a scanning device 8. An advantage of the apparatus 1 is the possibility to put the rod-like article S into rotational motion around the axis Y and simultaneously into lengthwise axial motion. During such motion, the article S may be inspected over the entire length and over the entire circumferential surface.

In this embodiment, the roller 6 is situated tangentially to the outside surface of the rod-like articles S placed in the pockets 2, substantially perpendicular to the axis Y of the rod-like articles S and to the axis of rotation X of the drum 3.

Fig. 2 shows the apparatus 1 for lengthwise moving of the rod-like articles S in the first embodiment in a side view in which it can be seen that the roller 6 is tangentially situated to the outside surface of the rod-like articles S conveyed on the drum 3.

A tangential situation of the roller 6 is to be understood as such situation of the roller 6 relative to the conveyed rod-like articles S wherein the working surface 7 remains in contact with at least two rod-like articles S conveyed in the adjacent pockets 2. A preferred solution is such situation of the roller 6 relative to the conveyed rod-like articles S wherein the working surface 7 of the roller 6 remains in contact with at least three adjacent rod-like articles S.

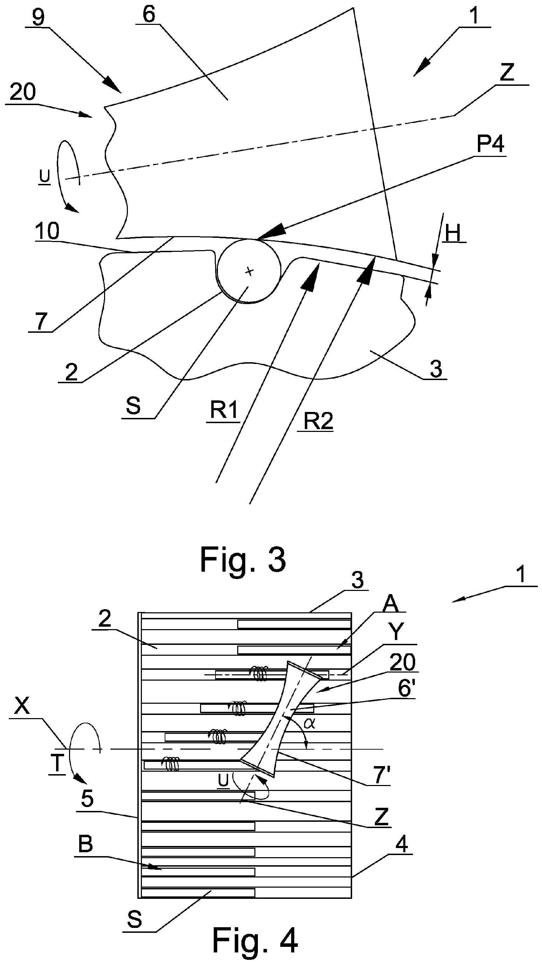

The term of contact of the working surface 7 of the roller 6 with the rod-like article is to be understood as a physical contact of the working surface 7 of the roller 6 with a point or a section which is situated on the circumferential surface of the rod-like article S farthest from the bottom of the pocket 2. In such contact, there is a friction between the outside surface of the rod-like article S and the working surface 7 of the roller 6. In Fig. 2, the roller 6 remains in contact with four rod-like articles S1, S2, S3, S4 at the points P1, P2, P3, P4, respectively. Since in this embodiment the roller 6 is situated substantially perpendicular with its longitudinal axis Z to the longitudinal axis Y of the rod-like articles S and to the axis of rotation X of the drum 3, the shape of the working surface 7 of the roller 6 will have a concavity 9 with a radius R2. The value of the radius R2 will be equal to the value of the drum radius R1 increased by the value of the parameter H, which was shown in detail in Fig. 3 in which, in magnification, a fragment of the roller 6 and of the conveying drum 3 together with the rod-like article S can be seen.

The parameter H defines the height to which the rod-like article S protrudes with its circumference above the circumferential surface 10 of the drum 3. In this case, the radius R2 of the concavity 9 of the roller 6 will be equal to R2 = R1 + H.

The value H will be different depending on the kind of the rod-like article S.

The concavity 9 occurs at a point where at least a part of lateral surface of the roller 6 is situated closer to the rotational axis Y of the roller 6 than its end edges.

Fig. 4 shows the apparatus 1 for lengthwise moving of the rod-like articles S in the second embodiment in a top view in which the roller 6' is situated at an angle α to the rotational axis X of the drum 3 and to the longitudinal axis Y of the rod-like articles S.

In such situation of the roller 6 relative to the axes X and Y, its working surface 7' will have a curvature with the shape of an elliptic section or a parabola, or the roller 6' itself will have the shape of a one-sheeted hyperboloid section.

This shape depends on the angle α at which the roller 6' is situated relative to the axis X and/or Y and on the shape of the element conveying the rod-like articles S at a place where the articles are tangential to the working surface 7'. The roller 6' is situated at the angle α which may be 1-89°, preferably 25-65°, relative to the axis X.

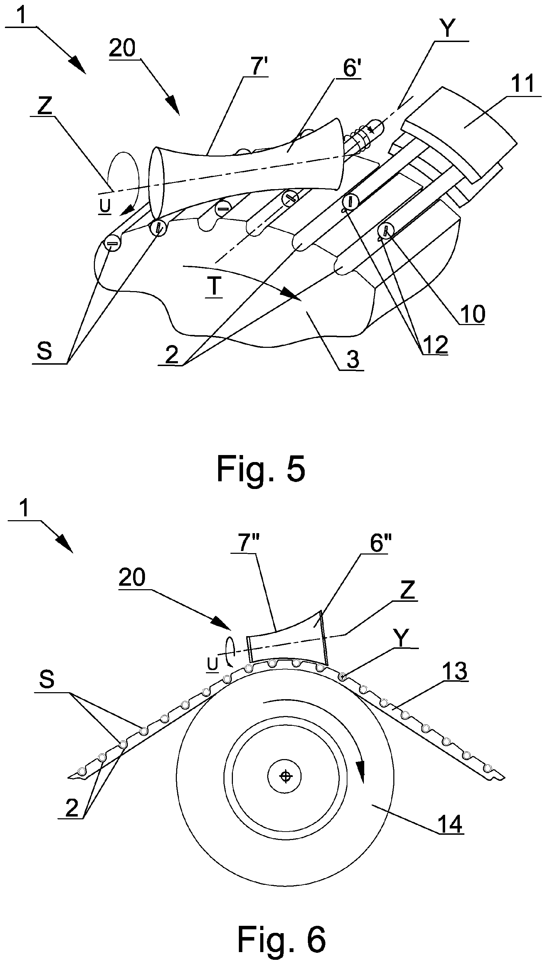

Fig. 5 shows the apparatus for lengthwise moving of the rod-like articles S in another embodiment in a perspective view. In this embodiment, there was shown one of the methods for using the apparatus 1 for lengthwise moving of the rod-like articles S for the purpose of positioning of the rod-like articles S containing a ferromagnetic insert 10. The roller 6', by rotating in the direction U around its longitudinal axis Z, lengthwise moves the articles S which after reaching the target position partially protrude outside the pocket 2. The portion of the article S protruding outside the pocket 2 is brought into the area of operation of the magnetic field generated by the apparatus 11, as a result of which the rod-like articles S containing the ferromagnetic insert 10 are adequately positioned. At the bottom of the pockets 2 over the whole or a part of the length as shown in Fig. 5, there may be situated holes 12 supplying the vacuum which keeps the articles S in the pockets. Such vacuum may be shut off for the time of moving of the article S in the pocket 2 and/or for the time of positioning in the area of operation of the magnetic field.

A conveying apparatus in the above embodiments is the drum 3, however, it is possible to convey and lengthwise move the articles S on a belt 13 conveying a single layer of the articles S placed one after another in the pockets 2, which was shown in Fig.6. The belt 13 may be also replaced with a chain provided with pockets adapted to receive the articles S.

In this embodiment, the apparatus 1 is provided with the roller 6 whose shape resembles a truncated cone with a concave lateral surface. The roller 6" is situated perpendicular to the longitudinal axis Y of the conveyed articles S, it may be also situated at an angle. The belt 13 is guided on a roller 14 and takes a shape corresponding to circumferential surface of the roller 14. The roller 6" has a working surface 7" which substantially reflects the shape which the belt 13 takes on the roller 14 at the place of contact of the roller 6" with the articles S. Instead of the roller 14, the belt 13 may also be guided on a guide with an adequate curvature. The curvature shape and angle should enable the moving roller 6" to remain tangential with its working surface 7" to at least three adjacent rod-like articles S.

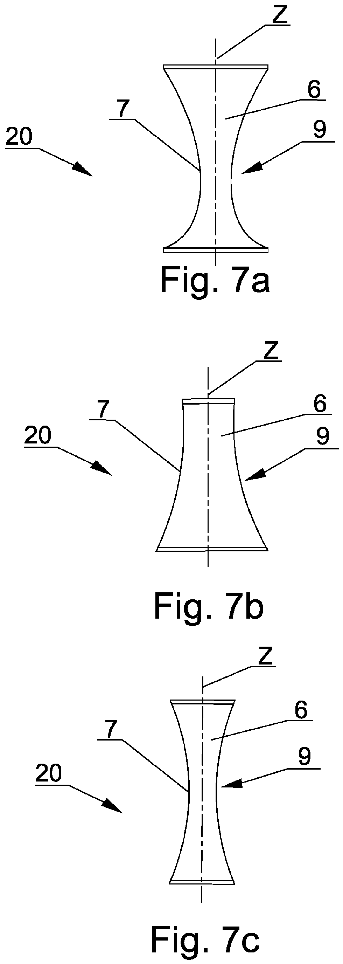

Depending on the shape of conveying surface of the drum 3 or of the belt 13 at the place of contact with the moving roller 6, 6', 6" and on the angular situation of the roller relative to the rotational axis X of the drum and/or to the longitudinal axis Y of the rod-like article S, the roller 6, 6', 6" will have the concave working surface 7, 7', 7" with a shape of a one-sheeted hyperboloid section, an elliptic section or a paraboloidal section. Examples of shapes of the concavity 9 of the working surface 7 of the roller 6 were shown in Figs. 7a, 7b, 7c.

## Claims

1. Apparatus (1) for lengthwise moving of rod-like articles (S) comprising
a conveyor (3) provided with pockets (2) adapted to convey the rod-like articles (S) situated transversely to the conveying direction;
a rotational element (20) adapted to lengthwise moving of the conveyed rod-like articles (S) in the conveyor (3) pockets (2), and situated tangentially to the circumferential surface of the conveyed rod-like articles (S),
**characterised in that**
the rotational element (20) has the shape of a roller (6, 6', 6") with a concave working surface (7) adapted to come into contact with the outside circumferential surface of the conveyed rod-like articles (S).

2. Apparatus as in claim 1 **characterised in that** the concavity (9) of the working surface (7) of the roller (6, 6', 6") has a shape selected from a group comprising a section of: a circle, an ellipse, a one-sheeted hyperboloid, a parabola.

3. Apparatus as in any of the claims 1 to 2 **characterised in that** the concave working surface (7) is adapted so that it remains in contact with at least two adjacent rod-like articles being conveyed.

4. Apparatus as in claim 3 **characterised in that** the concave working surface (7) is adapted so that it remains in contact with at least three adjacent rod-like articles being conveyed.

5. Apparatus as in any of the claims 1 to 4 **characterised in that** the rotational element (20) is situated at an angle to the rotational axis (X) of the conveyor (3) and/or the longitudinal axis (Y) of the rod-like article (S).

6. Apparatus as in claim 5 **characterised in that** the angles at which the rotational element is situated in the range between 5 and 175 degrees.

7. Apparatus as in any of the claims 1 to 6 **characterised in that** the working surface (7) of the rotational element (20) is made of a material selected from a group comprising: rubber, caoutchouc, spongy material, plastic, metal.

8. Method for moving the rod-like articles (S) comprising steps wherein:
the rod-like articles (S) are fed to the conveyor (3) pockets (2), whereas the rod-like articles are placed into the conveyor pockets transversely to the conveying direction;
the rod-like articles (S) are conveyed on the conveyor (3) towards the rotational element (20) situated tangentially with the working surface (7) to the outside surface of the conveyed articles (S);
**characterised in that**
by means of the rotational element (20) in the form of the roller (6, 6', 6") with the concave working surface (7) adapted to come into contact with the outside circumferential surface of the rod-like articles (S) being conveyed, the rod-like articles (S) are moved lengthwise in the conveyor (3) pockets (2) from a first position (A) to a second position (B).

9. Method as in claim 8 **characterised in that** simultaneously at least two adjacent conveyed rod-like articles (S) are moved lengthwise.
